# EUROPÄISCHE PATENTANMELDUNG

(11) **EP 0 949 429 A2**
(43) Veröffentlichungstag der Anmeldung: **13.10.1999**
(21) Anmeldenummer: 98123683.9
(22) Anmeldetag: 11.12.1998
(51) Int. Cl.: F16D 23/12

(54) **Notbetätigungseinrichtung für einen elektromotorischen Stellantrieb**

(30) Priorität: 07.04.1998 DE 19815496
(71) Anmelder: ROBERT BOSCH GMBH, 70442 Stuttgart (DE)
(72) Erfinder: Lott,Thomas, 77815 Buehl (DE); Bauer, Peter-Josef, 77815 Buehl (DE); Dilger, Werner, 77815 Buehl (DE); Meyer, Christian, 76229 Karlsruhe Groetzingen (DE); Ell, Richard, 77972 Mahlberg (DE)

(57) **Zusammenfassung**

Ein elektromotorischer Stellantrieb (10) ist mit einer Notbetätigungseinrichtung (21) bei Spannungsausfall ausgestattet. Die Notbetätigungseinrichtung (21) hat eine drehfest mit einem Getriebegehäuse (11) verbundene Hohlachse (22), welche gleichachsig zu einer Antriebswelle (14) des Stellantriebs (10) verläuft. An der Hohlachse (22) ist ein hülsenförmiger Drehgriff (23) als manuelles Bedienmittel axial verschiebbar sowie drehbar aufgenommen. Der Drehgriff weist ein gleichachsig angeordnetes Angriffsmittel (27) auf, mit dem er unter axialem Verschub mit dem Ende (25) der Antriebswelle (14) kuppelbar ist. Der im Eingriff mit dem Antriebswellenende (25) befindliche Drehgriff (23) ist durch Rastmittel an der Hohlachse (22) arretierbar.

Die Notbetätigungseinrichtung (10) ist beispielsweise an einem Kupplungsstellantrieb für eine Kraftfahrzeug-Reibungskupplung verwendbar.

## Beschreibung

### Stand der Technik

Die Erfindung geht aus von einer Notbetätigungseinrichtung für einen elektromotorischen Stellantrieb nach der Gattung des Patentanspruchs 1.

Es ist schon eine solche Notbetätigungseinrichtung eines Kupplungsstellantriebs für eine Kraftfahrzeug-Reibungskupplung bekannt (DE 43 20 205 A1). Dort ist ein aus einem Gehäuse frei herausragendes Wellenende eines elektrischen Antriebsmotors des Kupplungsstellantriebs mit Formschlußflächen für den Angriff einer Handkurbel vorbereitet. Mit der Handkurbel ist der Kupplungsstellantrieb beispielsweise bei Bordnetzausfall antreibbar, um die Reibungskupplung trennen und das Kraftfahrzeug abschleppen zu können.

Die bekannte Notbetätigungseinrichtung ist nachteilig, denn im Schadensfall muß der Fahrzeugführer die Handkurbel dem Bordwerkzeug entnehmen und unter den im Motorraum gegebenen ungünstigen räumlichen Verhältnissen am Wellenende anbringen. Da die Konstruktion des bekannten Kupplungsstellantriebs eine stromlos nicht lösbare Haltebremse erfordert, muß der Fahrzeugführer diese beim Trennen der Reibungskupplung überwinden. Die, wenn auch seltene, Bedienung der bekannten Notbetätigungseinrichtung ist daher wenig komfortabel.

### Vorteile der Erfindung

Die erfindungsgemäße Notbetätigungseinrichtung mit den Merkmalen des Patentanspruchs 1 hat demgegenüber den Vorteil, daß ihre Betriebsbereitschaft ohne lästige Montagearbeit ständig gegeben ist, daß sie mit einem einfachen Bewegungsvorgang wirksam gemacht werden kann, daß ein Drehgriff mit im Vergleich zu einer Handkurbel weniger Freiraum betätigbar ist und daß eine mittels der Notbetätigungseinrichtung bewirkte Einstellung des Stellantriebs auf einfache Weise dauerhaft gesichert, aber auch schnell wieder freigegeben werden kann.

Durch die in den Unteransprüchen aufgeführten Maßnahmen sind vorteilhafte Weiterbildungen und Verbesserungen der im Patentanspruch 1 angegebenen Notbetätigungseinrichtung für einen elektromotorischen Stellantrieb möglich.

Diese sind beispielsweise in der Gestaltung der Kulissenfühurng zu sehen, welche eindeutig getrennte Bewegungsabläufe und Funktionen der Notbetätigungseinrichtung bewirkt.

Im übrigen besteht die Notbetätigungseinrichtung im wesentlichen lediglich aus den beiden Bauteilen Hohlachse und Drehgriff. Der Stellantrieb ist daher mit nur geringem Kostenaufwand mit der Notbetätigungseinrichtung ausrüstbar. Ist eine solche Ausrüstung nicht erforderlich, so kann das Antriebswellenende auf einfache Weise zum Beispiel durch einen am Getriebegehäuse anzubringenden Deckel geschützt werden.

### Zeichnung

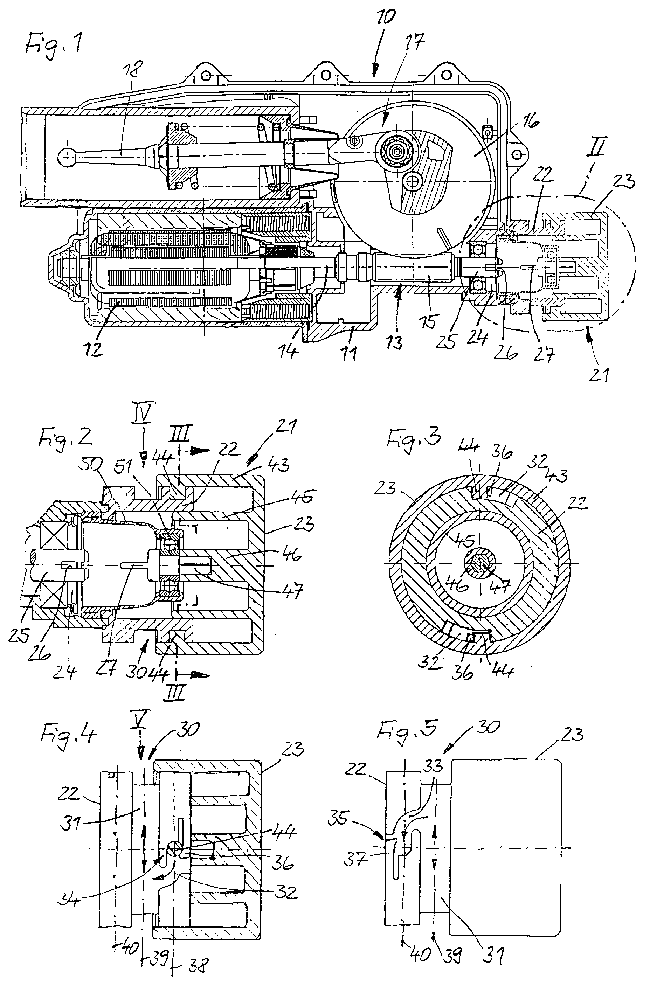

Ein Ausführungsbeispiel der Erfindung ist in der Zeichnung vereinfacht dargestellt und in der nachfolgenden Beschreibung näher erläutert. Es zeigen Figur 1 einen Längsschnitt eines elektromotorischen Kupplungsstellantriebs mit einer mit "II" gekennzeichneten Notbetätigungseinrichtung, Figur 2 die längsgeschnittene Notbetätigungseinrichtung in größerem Maßstab als in Figur 1, Figur 3 einen Querschnitt entlang dem Linienzug III-III in Figur 2 durch die Notbetätigungseinrichtung, Figur 4 eine Ansicht in Richtung des Pfeiles IV in Figur 2 auf die Notbetätigungseinrichtung mit einem Drehgriff im Schnitt und Figur 5 eine Ansicht in Richtung des Pfeiles V in Figur 4 auf die Notbetätigungseinrichtung.

### Beschreibung des Ausführungsbeispiels

Ein in Figur 1 dargestellter elektromotorischer Kupplungsstellantrieb 10 ist für die Bestätigung einer Kraftfahrzeug-Reibungskupplung vorgesehen. Der Kupplungsstellantrieb 10 hat ein Gehäuse 11, an das ein elektrischer Antriebsmotor 12 angeflanscht ist. Im Gehäuse 11 befindet sich ein Getriebe 13, dessen Antriebswelle 14 zugleich die Motorwelle des elektrischen Antriebsmotors 12 ist. Die Antriebswelle 14 ist mit einer Schnecke 15 versehen, welche mit einem Schneckenrad 16 kämmt. Das schneckenrad 16 ist zugleich die Kurbel eines im Gehäuse 11 angeordneten Kurbeltriebs 17, dessen Stößel 18 mit einem nicht dargestellten hydraulischen Geberzylinder zusammenwirkt. Dieser ist auf nicht dargestellte Weise durch eine Druckmittelleitung mit einem Nehmerzylinder verbunden, der am Ausrücker der Kraftfahrzeug-Reibungskupplung angreift. Mittels des Kupplungsstellantriebs 10 ist die Kraftfahrzeug-Reibungskupplung in bekannter Weise ein- und auszurücken.

Um die Kraftfahrzeug-Reibungskupplung bei einem Ausfall des Bordnetzes trennen zu können, ist der Kupplungsstellantrieb 10 mit einer Notbetätigungseinrichtung 21 ausgestattet. Diese besteht im wesentlichen aus einer Hohlachse 22 und einem hülsenförmigen Drehgriff 23 als manuelles Bedienmittel (Figuren 1 und 2). Die Hohlachse 22 ist motorabgewandt drehfest am Getriebegehäuse 11 im Bereich einer Öffnung 24 angeordnet, welche von einem Antriebswellenende 25 durchgriffen ist. Das Antriebswellenende 25 weist einen Querschlitz 26 auf. Der auf der Hohlachse 22 geführte Drehgriff 23 ist für den formschlüssigen Angriff am Antriebswellenende 25 mit einer schraubendreherartigen Klinge 27 ausgestattet. Die Antriebswelle 14, die Hohlachse 22 und der Drehgriff 23 mit der Klinge 27 verlaufen gleichachsig zueinander. Die Gestaltung dieser Elemente der Notbetätigungseinrichtung 21 im einzelnen und deren Zusammenwirken wird nachfolgend näher beschrieben.

Die in den Figuren 2 bis 5 in größerem Maßstab als in Figur 1 wiedergegebene Hohlachse 22 ist in der gezeichneten Ruhestellung der Notbetätigungseinrichtung 21 nur zu einem Teil ihrer axialen Länge von dem Drehgriff 23 übergriffen. Die Hohlachse 22 ist außenumfangsseitig mit einer Kulissenführung 30 versehen. Diese weist eine in der Mitte der Hohlachse 22 liegende Umlaufnut 31 mit seitlich paralleler Begrenzung auf. Von der Umlaufnut 31 gehen zu beiden Seiten jeweils zwei Führungsgassen 32, 33 aus, welche in Rastmitteln 34 beziehungsweise 35 mit einem seitlich angeordneten Rastfinger 36 beziehungsweise 37 stumpf enden. Die in der gezeichneten Stellung des Drehgriffs 23 von diesem übergriffenen Rastmittel 34 der Kulissenführung 30 liegen in einer ersten Radialebene 38 der Hohlachse 22 (Figur 4) und sind um 180° in Umfangsrichtung gegeneinander versetzt (Figur 3). Die Umlaufnut 31 wird für die Funktionsbeschreibung der Notbetätigungseinrichtung 21 als in einer zweiten Radialebene 39 der Hohlachse 22 liegend betrachtet. Die im freiliegenden Teil der Hohlachse 22 ausgeformten Rastmittel 35 (Figur 5) liegen in einer dritten Radialebene 40 und sind ebenfalls um 180° in Umfangsrichtung gegeneinander versetzt. Außerdem sind die beiden Paare von Rastmitteln 34 beziehungsweise 35 der beiden Radialebenen 38 und 40 mit den zugehörigen Führungsgassen 32 beziehungsweise 33 um 90° in Umfangsrichtung gegeneinander versetzt.

Der Drehgriff 23 weist an seiner die Hohlachse 22 übergreifenden Außenumfangswandung 43 innenumfangsseitig angeordnete Formschlußmittel in Form von zwei um 180° in Umfangsrichtung gegeneinander versetzte, radial nach innen vorspringende Zapfen 44 auf, welche in die Kulissenführung 30 der Hohlachse 22 eingreifen. In der gezeichneten Stellung des Drehgriffs 23 befinden sich die beiden Zapfen 44 in der ersten Radialebene 38 der Hohlachse 22 im Eingriff mit den Rastmitteln 34, deren Federzungen 36 seitlich an den Zapfen angreifen. Der Drehgriff 23 weist ferner einen zylindrischen Hohlkern 45 auf, mit dem er passend innen in die Hohlachse 22 eingreift und zu einem wesentlichen Teil an der Führung des Drehgriffs auf der Hohlachse beiträgt. Schließlich ist der Drehgriff 23 mit einem zentralen Zapfen 46 ausgestattet, in dem die gegen das Antriebswellenende 25 gerichtete Klinge 27 mit einem Sechskantschaft 47 drehfest aufgenommen ist. Die Klinge 27 kann jedoch auch einstückig am Zapfen 46 angeformt sein.

Die Zapfen 44 sind durch eine geringfügige Drehung des Drehgriffs 23 aus den arretierenden Rastmitteln 34 herauslösbar. Durch geringfügig weiteres Drehen und axiales Verschieben des Drehgriffs 23 sind die Zapfen 44 durch die jeweilige Führungsgasse 32 entsprechend dem in Figur 4 eingezeichneten Pfeil bewegbar. Aufgrund dieser Bewegung erfolgt eine Verlagerung der Klinge 27 in Richtung auf das Antriebswellenende 25. Die Breite der Umlaufnut 31 ist großer als die Breite (der Durchmesser) der Zapfen 44. Aufgrund dieses Axialspiels der Zapfen 44 in der Umlaufnut 31 kann die sich unmittelbar vor dem Antriebswellenende 25 befindende Klinge 27 durch Drehen des Drehgriffs 23 bezüglich des Querschlitzes 26 orientiert und durch geringfügige axiale Verlagerung des Drehgriffs in Eingriff mit dem Querschlitz des Antriebwellenendes gebracht werden. In dieser Stellung des Drehgriffs 23 kann mittels der Notbetätigungseinrichtung 21 die Antriebswelle 14 des elektrischen Antriebsmotors 12 gedreht und die Kraftfahrzeug-Reibungskupplung manuell getrennt werden. um ein ungewolltes Wiedereinkuppeln zu verhindern, werden die Zapfen 44 durch eine entsprechende Dreh- und Verschiebebewegung des Drehgriffs 23 in die jeweilige Führungsgasse 33 gelenkt und mit den in der dritten Radialebene 40 befindlichen Rastmitteln 35 festgelegt. Der Drehgriff 23 der Notbetätigungseinrichtung 21 ist damit an der Hohlachse 22 arretiert. In entsprechender umgekehrter Reihenfolge dieser Bewegungsabläufe kann die Reibungskupplung rückgestellt beziehungsweise die Notbetätigungseinrichtung 21 außer Eingriff mit der Antriebswelle 14 gebracht werden.

Mittels der Hohlachse 22 ist am Getriebegehäuse 11 des Kupplungsstellantriebs 10 ein das Antriebswellenende 25 umhüllendes balgförmiges Dichtelement 50 befestigt. Dieses ist axial bis zum Zapfen 46 des Drehgriffs 23 fortgeführt und im Bereich der Klinge 27 mit einer Drehlagerung 51 am Drehgriff 23 angeschlossen. Das Dichtelement 50 schließt die Öffnung 24 des Getriebegehäuses 11 nach außen ab.

## Patentansprüche

1. Notbetätigungseinrichtung (21) für einen elektromotorischen Stellantrieb (10), insbesondere Kupplungsstellantrieb für eine Kraftfahrzeug-Reibungskupplung, mit einem für den formschlüssigen Angriff eines manuellen Bedienmittels (23) ausgebildeten Antriebswellenende (25) eines in einem Gehäuse (11) des Stellantriebs (10) angeordneten Getriebes (13), gekennzeichnet durch die weiteren Merkmale:
- es ist eine gleichachsig zur Antriebswelle (14) verlaufende Hohlachse (22) drehfest mit dem Getriebegehäuse (11) verbunden,
- an der Hohlachse (22) ist ein hülsenförmiger Drehgriff (23) als manuelles Bedienmittel axial verschiebbar sowie drehbar aufgenommen,
- der Drehgriff (23) weist ein gleichachsig angeordnetes Angriffsmittel (27) auf, mit dem der Drehgriff (23) unter axialem Verschub mit dem Antriebswellenende (25) kuppelbar ist,
- der im Eingriff mit dem Antriebswellenende (25) befindliche Drehgriff (23) ist durch Rastmittel (35) an der Hohlachse (22) arretierbar.

2. Notbetätigungseinrichtung nach Anspruch 1, gekennzeichnet durch die weiteren Merkmale:
- die Hohlachse (22) ist außenumfangsseitig mit einer Kulissenführnng (30) versehen,
- der Drehgriff (23) übergreift die Hohlachse (22) und weist innenumfangsseitig angeordnete Formschlußmittel (44) auf, welche in die Kulissenführung (30) eingreifen,
- die Kulissenführung (30) weist in einer ersten Radialebene (38) der Hohlachse (22) liegende Rastmittel (34) auf, mit denen der nicht im Eingriff mit dem Antriebswellenende (25) befindliche Drehgriff (23) arretierbar ist,
- die Kulissenführung (30) weist eine zweite Radialebene (39) auf, in welcher der Drehgriff (23) drehbar und mit dem Antriebswellenende (25) kuppelbar ist,
- die der Arretierung des gekuppelten Drehgriffs (23) dienenden Rastmittel (35) befinden sich in einer dritten Radialebene (40) der Kulissenführung (30).

3. Notbetätigungseinrichtung nach Anspruch 2, dadurch gekennzeichnet, daß der Drehgriff (23) wenigstens einen radial von einer Außenumfangswandung (43) nach innen vorspringenden Zapfen (44) hat, welcher in die Kulissenführung (30) der Hohlachse (22) eingreift.

4. Notbetätigungseinrichtung nach Anspruch 3, dadurch gekennzeichnet, daß die Kulissenführung (30) in der zweiten Radialebene (39) als Umlaufnut (31) der Hohlachse (22) mit einer Breite ausgebildet ist, welche die Breite des Zapfens (44) am Drehgriff (23) überschreitet.

5. Notbetätigungseinrichtung nach Anspruch 4, dadurch gekennzeichnet, daß von beiden Seiten der Umlaufnut (31) der Hohlachse (22) in Umfangsrichtung gegeneinander versetzte Führungsgassen (32, 33) ausgehen, die in der jeweiligen ersten beziehungsweise dritten Radialebene (38, 40) der Kulissenführung (30) stumpf enden und seitlich mit einem federnden Rastfinger (36, 37) für den Angriff am Zapfen (44) des Drehgriffs (23) begrenzt sind.

6. Notbetätigungseinrichtung nach Anspruch 1, dadurch gekennzeichnet, daß der Drehgriff (23) einen zylindrischen Hohlkern (45) hat, mit dem er innenumfangsseitig an der Hohlachse (22) geführt ist.

7. Notbetätigungseinrichtung nach Anspruch 1, dadurch gekennzeichnet, daß im Drehgriff (23) eine schraubendreherartige Klinge (27) als Angriffsmittel an einem Querschlitz (26) des Antriebswellenendes (25) angeordnet ist.

8. Notbetätigungseinrichtung nach Anspruch 1, dadurch gekennzeichnet, daß am Getriebegehäuse (11) mittels der Hohlachse (22) ein das Antriebswellenende (25) umhüllendes balgförmiges Dichtelement (50) befestigt ist, welches mit einer Drehlagerung (51) im Bereich des Angriffsmittels (27) am Drehgriff (23) angeschlossen ist.
